(19) Europäisches Patentamt / European Patent Office / Office européen des brevets

(11) **EP 4 091 241 B1**

(12) **EUROPÄISCHE PATENTSCHRIFT**

(45) Veröffentlichungstag und Bekanntmachung des Hinweises auf die Patenterteilung:
**07.05.2025   Patentblatt 2025/19**

(21) Anmeldenummer: **21700209.6**

(22) Anmeldetag: **12.01.2021**

(51) Internationale Patentklassifikation (IPC):
*H02M 1/32* (2007.01)

(52) Gemeinsame Patentklassifikation (CPC):
**H02M 1/32;** H02J 3/26; H02M 1/325; H02M 7/5387; Y02E 40/50

(86) Internationale Anmeldenummer:
**PCT/EP2021/050422**

(87) Internationale Veröffentlichungsnummer:
**WO 2021/144234 (22.07.2021 Gazette 2021/29)**

(54) **VERFAHREN ZUM PHASENGETRENNTEN ÜBERSTROMSCHUTZ EINER DREIPHASIGEN BRÜCKENSCHALTUNG**

METHOD FOR THE PHASE-SEPARATED OVERCURRENT PROTECTION OF A THREE-PHASE BRIDGE CIRCUIT

PROCÉDÉ DE PROTECTION CONTRE LES SURINTENSITÉS SÉPARÉE EN PHASE D'UN CIRCUIT EN PONT TRIPHASÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2020   EP 20151516**

(43) Veröffentlichungstag der Anmeldung:
**23.11.2022   Patentblatt 2022/47**

(73) Patentinhaber: **KK Wind Solutions A/S**
**7430 Ikast (DK)**

(72) Erfinder:
• **KRETSCHMANN, Jörg**
**47906 Kempen (DE)**
• **ENGELHARDT, Stephan**
**47665 Sonsbeck (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A2- 1 152 520        EP-A2- 2 830 175
EP-B1- 1 152 520        DE-A1- 102009 045 351

DE-A1- 102015 205 627      US-A1- 2007 086 226

• ZHANG WENPING ET AL: "Survey on Fault-Tolerant Techniques for Power Electronic Converters", IEEE TRANSACTIONS ON POWER ELECTRONICS, INSTITUTE OF ELECTRICAL AND ELECTRONICS ENGINEERS, USA, vol. 29, no. 12, 1 December 2014 (2014-12-01), pages 6319 - 6331, XP011556075, ISSN: 0885-8993, [retrieved on 20140813], DOI: 10.1109/TPEL.2014.2304561
• MEYER ROBERT ET AL: "Fault ride through control of medium-voltage converters with LCL filter in distributed generation systems", 2013 IEEE ENERGY CONVERSION CONGRESS AND EXPOSITION, IEEE, 15 September 2013 (2013-09-15), pages 1954 - 1961, XP032516748, DOI: 10.1109/ECCE.2013.6646947
• ALEPUZ S ET AL: "Control Strategies Based on Symmetrical Components for Grid-Connected Converters Under Voltage Dips", IEEE TRANSACTIONS ON INDUSTRIAL ELECTRONICS, IEEE SERVICE CENTER, PISCATAWAY, NJ, USA, vol. 56, no. 6, 1 June 2009 (2009-06-01), pages 2162 - 2173, XP011253642, ISSN: 0278-0046

**Beschreibung**

Die Erfindung betrifft ein Verfahren zum Betreiben eines dreiphasigen Umrichters an einer dreiphasigen Last, insbesondere einem elektrischen Netz, wobei der dreiphasige Umrichter einen Gleichspannungszwischenkreis, mindestens eine dreiphasige Brückenschaltung und mindestens eine Steuereinheit zur Steuerung der Brückenschaltung aufweist, wobei in der mindestens einen Brückenschaltung pro Phase mindestens je zwei Leistungsschalter vorgesehen sind, welche mit dem Gleichspannungszwischenkreis in Serie verbunden sind, wobei bei dem Verfahren abhängig von den vorgegebenen Sollspannungswerten der drei Phasen des Umrichters die Leistungsschalter jeder einzelnen Phase über die Steuereinheit angesteuert werden, sodass über Schaltvorgänge der Leistungsschalter eine dreiphasige Wechselspannung an der dreiphasigen Last erzeugt wird. Daneben betrifft die Erfindung eine Vorrichtung zur Erzeugung einer dreiphasigen Wechselspannung an einer dreiphasigen Last oder einem elektrischen Netz mit mindestens einem dreiphasigen Umrichter und einem Gleichspannungszwischenkreis, wobei der Umrichter mindestens eine dreiphasige Brückenschaltung und mindestens eine Steuereinheit zur Steuerung der Brückenschaltung aufweist, wobei in der mindestens einen Brückenschaltung pro Phase mindestens je zwei Leistungsschalter vorgesehen sind, welche mit dem Gleichspannungszwischenkreis in Serie verbunden sind, wobei die Vorrichtung dazu ausgebildet ist, abhängig von vorgegebenen Sollspannungswerten für alle drei Phasen des Umrichters die Leistungsschalter jeder einzelnen Phase über die Steuereinheit anzusteuern, sodass über Schaltvorgänge der Leistungsschalter eine Wechselspannung erzeugt wird.

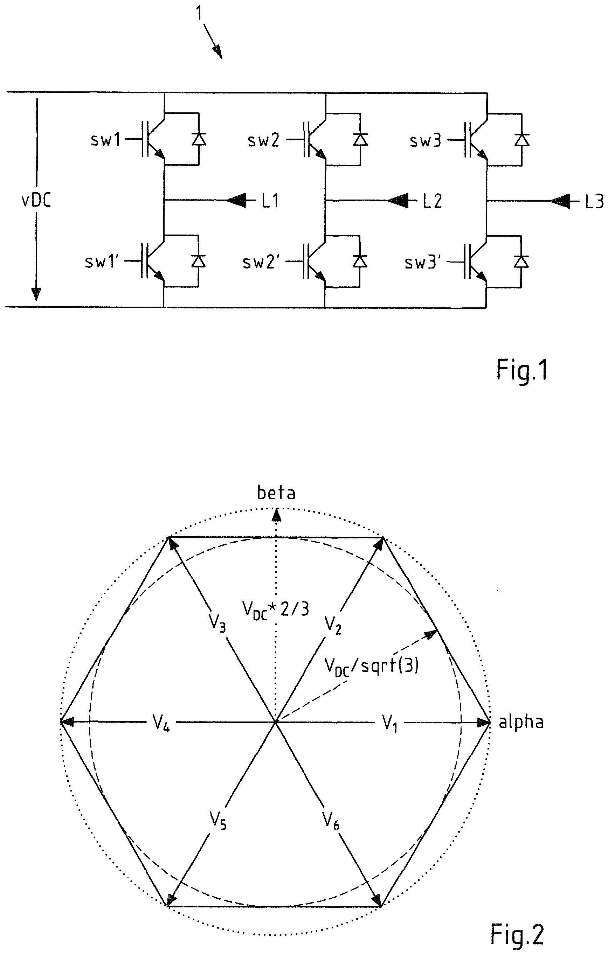

Dreiphasige Umrichter werden eingesetzt, um aus einer Gleichspannung eine spezifische Wechselspannung zu erzeugen, welche zum Betreiben einer elektrischen Last, beispielsweise eines Motors oder auch zur Einspeisung elektrischer Energie in ein dreiphasiges elektrisches Netz eingesetzt werden. Die im Umrichter verwendete Brückenschaltung weist in der Regel je zwei Leistungsschalter pro Phase auf, sodass üblicherweise 6 Leistungsschalter zur Erzeugung einer Wechselspannung mit drei Phasen verwendet werden. Die Leistungsschalter können durch IGBT-Leistungsschalter verwirklicht werden, welche optional eine antiparallelgeschaltete Freilaufdiode besitzen. Aber auch andere Leistungsschalter können hier eingesetzt werden. Eine entsprechend aus dem Stand der Technik bekannte Brückenschaltung ist in Fig. 1 dargestellt.

Die Kosten für dreiphasige Umrichter, insbesondere bei höheren Leistungsklassen werden vor allem durch die notwendige Leistungselektronik, d. h. beispielsweise durch die benötigten IGBTs bzw. IGBT-Module bestimmt. IGBTs sind besonders schnelle Leistungsschalter und weisen für den Einsatz im Umrichter sehr gute dynamische Eigenschaften auf. Die Leistungsschalter werden in Bezug auf die noch ohne Schädigung des IGBTs schaltbaren Maximalströme hin dimensioniert, d.h. die IGBTs werden für entsprechende Maximalströme ausgelegt. Überschreiten die zu schaltenden Ströme dauerhaft oder kurzzeitig die Maximalströme wird der entsprechende Leistungsschalter bzw. das IGBT abgeschaltet, um eine Beschädigung oder Zerstörung des IGBTs aufgrund einer Überlastung zu vermeiden.

Die Auswahl der Leistungsschalter eines dreiphasigen Umrichters erfolgt jedoch nicht nur im Hinblick auf den Dauerbetrieb des Umrichters, sondern auch im Hinblick auf kurzzeitige Leistungsspitzen, welche ebenfalls über dreiphasige Umrichter regelmäßig bereitgestellt werden müssen. So treten bei an elektrischen Netzen betriebenen, dreiphasigen Umrichtern im Falle von Netzspannungsfehlern häufig sehr große Ströme auf, welche zur Überlastung einzelner IGBTs führen können. Aus dem Stand der Technik ist bekannt, in einem solchen Fall die IGBTs der Brückenschaltung des Umrichters vollständig zu sperren, sobald in einem der Leistungsschalter einer Phase Überlastungszustände, wie beispielsweise ein Überstrom oberhalb einer Abschaltgrenze eines IGBTs, auftritt. Der Stromfluss erfolgt dann nur noch über die zu den IGBTs antiparallel geschalteten Freilaufdioden, welche bei den heute gebräuchlichen Leistungsschaltern einen kurzzeitig höheren Strom als die IGBTs führen können. Dies ist Bestandteil eines Schutzkonzepts, um alle Leistungsschalter der Brückenschaltung des Umrichters vor Beschädigungen zu schützen.

Ein Umrichter, dessen Brückenschaltung im Falle eines Fehlers vollständig abgeschaltet wird, ist aus der europäischen Patentanmeldung EP 2 830 175 A2 bekannt. Mit einer Steuerung eines dreiphasigen Umrichters abhängig von einem Eingangsgleichstrom beschäftigt sich dagegen die europäische Patentanmeldung EP 1 152 520 A2.

Aus der US 2007/0086226 A1 ist beispielsweise ein Verfahren zum Betreiben eines Umrichters bekannt, bei welchem ein zusätzlicher Leistungsschalter zugeschaltet wird, sofern eine Fehlfunktion in einem Leistungsschalter der drei Phasen ermittelt wird.

In dem Aufsatz "Survey on Fault-Tolerant Techniques for Power Electronic Converters", IEEE Transaction on Power Electronics, Zhang Wenping et Al., Bd. 29, Nr. 12, 1. Dezember 2014 wird für eine Fehler redundante Topologie die Verwendung von zusätzlichen Leistungsschaltern, zum Beispiel in Form von TRIACS, vorgeschlagen.

Beide redundante Topologien führen bei Leistungsschaltern mit hoher Schaltleistung jedoch zu einer deutlichen Kostensteigerung.

Aus dem Aufsatz "Fault Ride Through Control of Medium-Voltage Converters with LCL Filter in Distributed Generation Systems", Robert Meyer et Al., IEEE Energy Conversion Congress and Exposition, IEEEE, 15. September 2013, Seiten 1954 - 1961 sind Konzepte zum Durchfahren von Netzfehlerzuständen bekannt. Daraus resultierende Überlastungszustände in einzelnen Phasenarmen des Umrichters werden nicht thematisiert.

Aus den deutschen Patentanmeldungen DE 10 2015 205 627 A1 und DE 10 2009 045 351 A1 sind dreiphasige Umrichter bekannt, welche im Falle eines Fehlers in einer Phase die dreiphasige Brückenschaltung mit den verbliebenen zwei Phasen weiterbetreiben können.

Statt eines IGBTs mit Freilaufdiode können beispielsweise auch andere Leistungsschalter welche aus einem aktiv schaltbarem Leistungshalbleiter sowie einem parallelgeschaltetem rückwärtsleitenden passiven Leistungshalbleiter bestehen, verwendet werden. Der rückwärtsleitende Zustand bezeichnet dann den Stromfluss durch die Freilaufdiode in ihrer Durchlassrichtung, beziehungsweise den Stromfluss in Durchlassrichtung des passiven Leistungshalbleiters.

Problematisch ist aber, wenn während des Überlastungszustands gleichzeitig eine hohe Regeldynamik gefordert wird. So wird beispielsweise von Netzbetreibern regelmäßig in Grid-Codes gefordert, dass bei einem Netzspannungseinbruch innerhalb sehr kurzer Zeit ein maximaler Blindstrom vom Umrichter in das Netz eingespeist werden muss, um die Netzspannung zu stützen. Da die dann auftretenden Ströme vom Netzspannungseinbruch selbst abhängen, können regelmäßig Überlastungszustände in einzelnen Phasen der Brückenschaltung auftreten, so dass die Brückenschaltung in dem Umrichter abgeschaltet und geschützt wird. Gleichzeitig wird aber von der Steuerung des Umrichters eine hohe Regeldynamik gefordert, um konform mit den Grid-Codes zu sein. Während der Abschaltung der Brückenschaltung kann die Steuerung aber auf den Umrichter nicht einwirken, so dass es zu einer Verschlechterung des dynamischen Regelverhaltens des Umrichters kommt. Um das Abschalten zu vermeiden, müssen entsprechend leistungsstark dimensionierte Leistungsschalter vorgesehen werden, die beispielsweise auch im Falle eines Netzspannungseinbruchs keine Abschaltung der Brückenschaltung erfordern. Hierdurch steigen aber die Kosten der Umrichter.

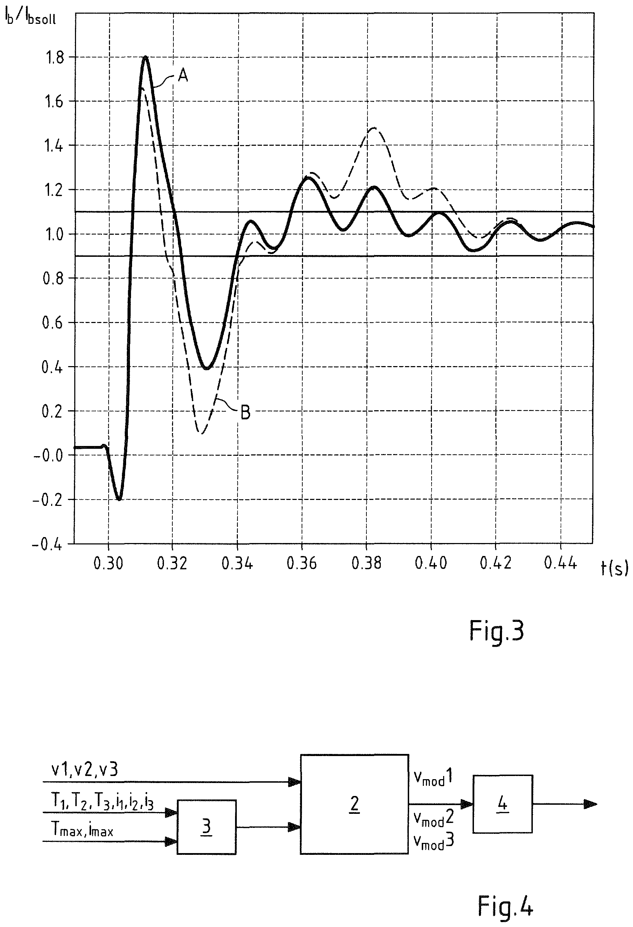

Fig. 3 zeigt beispielsweise simulierte Blindstromabgaben zweier Umrichter bei einem simulierten Netzspannungseinbruch mit unterschiedlich dimensionierten

Leistungsschaltern. Dargestellt sind die gleitenden 20ms-Mittelwerte des Blindstroms bei einer Netzfrequenz von 50 Hz gemäß IEC 61400-21. Mit dem Wert 1,0 ist auf der Y-Achse die Sollblindstromabgabe bezeichnet. Ein üblicherweise erlaubter Korridor von 90 % bis 110 % der Blindstromabgabe ist durch zwei Achsen parallel zur X-Achse dargestellt. Auf der X-Achse ist die Zeit dargestellt, wobei der Spannungseinbruch bei t= 0,30 s simuliert wurde.

Kurve A zeigt das simulierte Verhalten eines Umrichters, bei welchem die Leistungsschalter so gewählt wurden, sodass diese auch im Falle des Netzspannungseinbruchs keine Überlastungszustände aufweisen. Kurve B zeigt das Verhalten eines dreiphasigen Umrichters mit kleiner dimensionierten Leistungsschaltern. Während des Ausregelns der Blindstromabgabe werden zwei Phasen kurzzeitig überlastet und die Brückenschaltung des Umrichters kurzzeitig gesperrt. In Kurve A wird zwar der erlaubte Korridor der Blindstromabgabe bereits bei t= 0,39 s erreicht. Nachteilig ist aber, dass die Kosten der IGBT-Leistungsschalter relativ hoch sind, da diese auf den Netzspannungseinbruch hin dimensioniert wurden.

Üblicherweise werden die Leistungsschalter bzw. IGBT so gewählt, dass ein Ansprechen der Überstromschutzmaßnahmen in derartigen Ausnahmefällen erlaubt wird, sodass die Kosten für die IGBT-Leistungsschalter gesenkt werden können. Allerdings wird durch das Ansprechen des Überstromschutzes einzelner IGBT-Leistungsschalter die gesamte Brückenschaltung durch die Steuereinheit gesperrt, was zu einem schlechteren dynamischen Regelverhalten der Brückenschaltung führt. Wie in Fig. 3 zu erkennen ist, erreicht Kurve B mit deutlichem Überschwingen den erlaubten Blindstromabgabekorridor erst bei etwa t = 0,41 s und damit später als Kurve A. Bei kostengünstigerer Dimensionierung der IGBTs werden daher zwar Kostenvorteile erzielt, diese haben aber ein nachteiliges dynamisches Verhalten der Brückenschaltung bei Überströmen zur Folge.

Von diesem Problem geht die Erfindung aus und hat sich zur Aufgabe gemacht, ein Verfahren zum Betreiben eines dreiphasigen Umrichters an einer dreiphasigen Last, insbesondere einem elektrischen Netz zur Verfügung zu stellen, mit welchem trotz kostengünstiger Dimensionierung der IGBT-Leistungsschalter der dreiphasigen Brückenschaltung ein sehr gutes dynamisches Regelverhalten erzielt werden kann. Ferner liegt der vorliegenden Erfindung die Aufgabe zugrunde, eine entsprechende, gattungsgemäße Vorrichtung zur Erzeugung einer dreiphasigen Wechselspannung an einer dreiphasigen Last oder einem elektrischen Netz mit mindestens einem dreiphasigen Umrichter zur Verfügung zu stellen, welche bei geringeren Kosten ein deutlich verbessertes dynamisches Regelverhalten, insbesondere bei Netzspannungsfehlern aufweist.

Gemäß einer ersten Lehre der vorliegenden Erfindung wird die oben genannte Aufgabe durch ein Verfahren zum Betreiben eines dreiphasigen Umrichters dadurch gelöst, dass unter Verwendung von Überwachungsmitteln eine Überwachung der einzelnen Phasen auf einen Überlastungszustand durchgeführt wird, wobei im Falle der Detektion eines Überlastungszustands in einer oder zwei Phasen des dreiphasigen Umrichters zumindest für die Dauer des detektierten Überlastungszustands die Brückenschaltung mit einer oder zwei nicht überlasteten Phasen weiterbetrieben wird, wobei zumindest für die Dauer des Überlastungszustands anstelle der vorgegebenen Sollspannungswerte modifizierte Sollspannungswerte bestimmt werden, welche zur Steuerung der Brückenschaltung verwendet werden und zur Bestimmung der modifizierten Sollspannungswerte die vorgegebenen Sollspannungswerte der drei Phasen in einen vorgegebenen Sollspannungsdrehzeiger im $\alpha\beta$-Koordinatensystem transformiert werden, der Sollspannungsdrehzeiger in einen Differenzspannungszeiger und mindestens einen modifizierten Sollspannungsdrehzeiger im $\alpha\beta$-Koordi-

natensystem zerlegt wird, wobei der mindestens eine modifizierte Sollspannungsdrehzeiger in den überlasteten Phasen jeweils die sich einstellende maximal Phasenspannung berücksichtigt und aus dem modifizierten Sollspannungsdrehzeiger im αβ-Koordinatensystem die modifizierten Sollspannungswerte bestimmt werden können.

Es hat sich gezeigt, dass der Weiterbetrieb einer dreiphasigen Brückenschaltung trotz Überlastung in einer oder zwei Phasen möglich ist, ohne Schäden an den Leistungsschaltern hervorzurufen, in dem nur die IGBTs in den nicht überlasteten Phasen der Brückenschaltung weiter betrieben werden und in den überlasteten Phasen der Stromfluss beispielsweise über Freilaufdioden erfolgt. Hierdurch kann bereits das dynamische Regelverhalten der Brückenschaltung im Vergleich zur kompletten Abschaltung der Brückenschaltung im Überlastungsfall verbessert werden.

Erfindungsgemäß werden zumindest für die Dauer des Überlastungszustands anstelle der vorgegebenen Sollspannungswerte modifizierte Sollspannungswerte bestimmt, welche zur Steuerung der Brückenschaltung verwendet werden. Hierdurch besteht die Möglichkeit, trotz Überlastung einer Phase oder zweier Phasen der Brückenschaltung weiterhin eine Steuerbarkeit der dreiphasigen Brückenschaltung aufrechtzuerhalten und vorteilhafte Schaltzustände einzustellen. Über die modifizierten Sollspannungswerte kann eine deutliche Verbesserung des dynamischen Regelverhaltens im Falle von Überlastungszuständen einer oder zweier Phasen im Vergleich zum Abschalten der gesamten Brückenschaltung erreicht werden. Hieraus resultiert zudem, dass die Leistungsdimensionierung der Leistungsschalter ohne wesentliche Einbußen bezüglich des Regelverhaltens um 10 % bis 15 % gesenkt werden kann.

Erfindungsgemäß werden zur Bestimmung der modifizierten Sollspannungswerte die vorgegebenen Sollspannungswerte der drei Phasen in einen vorgegebenen Sollspannungsdrehzeiger im αβ-Koordinatensystem transformiert, der Sollspannungsdrehzeiger in einen Differenzspannungszeiger und einen modifizierten Sollspannungsdrehzeiger im αβ-Koordinatensystem zerlegt, wobei der mindestens eine modifizierte Sollspannungsdrehzeiger in den überlasteten Phasen jeweils die sich einstellenden maximalen Phasenspannungen berücksichtigt und aus dem resultierenden, modifizierten Sollspannungsdrehzeiger im αβ-Koordinatensystem die modifizierten Sollspannungswerte für die Phasen bestimmt werden können.

Im αβ-Koordinatensystem kann durch einfache Zerlegung des vorgegebenen Sollspannungsdrehzeigers in einen Differenzspannungszeiger und einen modifizierten Sollspannungsdrehzeiger ein modifizierter Sollspannungsdrehzeiger bestimmt werden, aus welchem wiederum die modifizierten Sollspannungswerte der einzelnen Phasen der Brückenschaltung ermittelt werden können. Durch Vorgaben an den Differenzspannungsdrehzeiger kann der modifizierte Sollspannungsdrehzeiger und damit die Ansteuerung der Brückenschaltung durch die Steuereinheit im Überlastungsfall auf einfache Weise variiert und optimiert werden.

Alternativ kann gemäß einer weiteren Ausgestaltung des erfindungsgemäßen Verfahrens der modifizierte Sollspannungsdrehzeiger im αβ-Koordinatensystem von der Steuereinheit der Brückenschaltung direkt verwendet werden, ohne die modifizierten Sollspannungswerte für alle drei Phasen zu ermitteln. Hierzu muss die Steuereinheit lediglich in der Lage sein, Sollspannungsdrehzeiger im αβ-Koordinatensystem zur Ansteuerung der Brückenschaltung zu verwenden.

Gemäß einer Ausgestaltung des erfindungsgemäßen Verfahrens wird durch die Überwachungsmittel der Überlastungszustand einer Phase durch Überschreiten eines vorbestimmten Stromes in der betreffenden Phase oder einer vorbestimmten Temperatur eines Bauteils der betreffenden Phase, vorzugsweise eines Leistungsschalters oder einer Freilaufdiode erkannt. Die Hersteller von Leistungshalbleitern geben üblicherweise Werte für den maximal zulässigen Strom und die maximal zulässige Sperrschichttemperatur der Leistungsschalter oder Freilaufdioden an. Werden diese Werte überschritten, droht die Zerstörung des Bauteils durch thermische Überlastung. Daher sind der Strom und die Temperatur bevorzugte Größen, um eine Überlastung zu erkennen und Maßnahmen zur Vermeidung zu ergreifen.

Wird bei der Überwachung der einzelnen Phasen der Brückenschaltung sich die bei der jeweiligen Überlastung, beispielweise über der Freilaufdiode, einstellende, maximale Phasenspannung bestimmt und als modifizierter Sollspannungswert für die überlastete Phase verwendet, kann auf einfache Weise bei Feststellung der Überlastung und des jeweiligen Vorzeichens der Überlastungsspannung der modifizierte Sollspannungswert für die überlastete Phase berechnet werden. Die maximale Phasenspannung beträgt 2/3 der Gleichspannung des Zwischenkreises bzw. -2/3 der Gleichspannung des Zwischenkreises je nach Stromrichtung während der Überlastung. Stehen die modifizierten Sollspannungswerte für die überlasteten Phasen fest, können die modifizierten Sollspannungswerte für die nicht überlasteten Phasen zur Optimierung des Regelverhaltens verwendet werden.

Gemäß einer weiteren Ausgestaltung des erfindungsgemäßen Verfahrens werden für mindestens eine nicht überlastete Phase unter Berücksichtigung der vorgegebenen Sollspannungswerte für drei Phasen und der modifizierten Sollspannungswerte für mindestens eine überlastete Phase modifizierte Sollspannungswerte für die mindestens eine nicht überlastete Phase ermittelt. Bei der Berücksichtigung des vorgegebenen Sollspannungswerts für drei Phasen und der modifizierten Sollspannungswerte für mindestens eine überlastete Phase kann über die modifizierten Sollspannungswerte für die mindestens eine nicht überlastete Phase eine Optimierung der im Überlastungsfall zu schaltenden, modifizierten Sollspannungswerte durchgeführt werden, so dass sich ein optimiertes Regelverhalten ergibt.

Gemäß einer weiteren Ausgestaltung des erfindungsgemäßen Verfahrens weist der Betrag des Differenzspannungsdrehzeigers einen vorbestimmten Wert auf. Dieser vorbestimmte Wert muss nicht notwendigerweise zeitlich konstant sein, sondern kann beispielsweise abhängig von der jeweiligen Position des vorgegebenen Sollspannungsdrehzeigers sein. Hierdurch kann das dynamische Regelverhalten ebenfalls beeinflusst werden.

Besonders vorteilhaft ist es, wenn der Betrag des Differenzspannungsdrehzeigers gemäß einer weiteren Ausgestaltung so klein wie möglich gewählt wird. Ein minimaler Betrag eines Differenzspannungsdrehzeiger bedeutet, dass der gewählte modifizierte Sollspannungsdrehzeiger einen minimalen Abstand zum ursprünglich vorgegebenen Sollspannungsdrehzeiger besitzt. Das Einschwingverhalten der Brückenschaltung kann hierdurch optimiert werden.

Gemäß einer weiteren Ausgestaltung des Verfahrens weist der Betrag des Differenzspannungsdrehzeiger zumindest zeitweise den Wert Null auf. In diesem Fall kann anhand der verbliebenen, nicht überlasteten Phasen der vorgegebene Sollspannungsdrehzeiger zumindest zeitweise durch die verbliebenen Schaltzustände der nicht überlasteten Phasen vollständig rekonstruiert werden und damit zumindest zeitweise eine identische dreiphasige Wechselspannung am Umrichter trotz Überlastung erzeugt werden.

Werden in der Brückenschaltung IGBTs mit mindestens einer antiparallelgeschalteten Freilaufdiode als Leistungsschalter verwendet, kann die Brückenschaltung des Umrichters besonders robust ausgestaltet werden, da im Überlastungsfall der Überlaststrom über die Freilaufdioden fließen kann.

Besonders bevorzugt wird das Verfahren mit dreiphasigen Umrichtern von Vorrichtungen zur Erzeugung und Einspeisung elektrischer Energie in ein elektrisches Netz, vorzugsweise mit dreiphasigen Umrichtern von Windenergieanlagen, von Photovoltaikanlagen mit oder ohne elektrische Speicher oder von Komponenten zur Speicherung elektrischer Energie, insbesondere von Batteriespeichern, die am elektrischen Netz betrieben werden, durchgeführt. Es hat sich gezeigt, dass das erfindungsgemäße Verfahren es ermöglicht, die Leistungsschalter kleiner zu dimensionieren und trotzdem ein sehr gutes Regelverhalten zu erzielen.

Aus diesem Grund wird gemäß einer weiteren Ausgestaltung des Verfahrens das Verfahren bevorzugt während eines Netzspannungsfehlers, vorzugsweise im "Fault-Ride-Through"-(FRT)-Betrieb des Umrichters durchgeführt. Gerade in diesem FRT-Betrieb treten häufig Überlastungen einzelner Phasen der verwendeten Brückenschaltungen auf, welche bisher das Regelverhalten der Brückenschaltung deutlich verschlechterten. Mit dem erfindungsgemäßen Verfahren kann damit mit Leistungsschaltern geringerer Leistung ein Regelverhalten bereitgestellt werden, welches bisher nur mit größer dimensionierten Leistungsschaltern erreichbar war. Gleichzeitig können mit dem erfindungsgemäßen Verfahren trotz geringerer Dimensionierung der Leistungsschalter Anforderungen der Netzbetreiber bei geringeren Kosten erfüllt werden.

Die oben genannte Aufgabe wird durch eine gattungsgemäße Vorrichtung zur Erzeugung einer dreiphasigen Wechselspannung an einer dreiphasigen Last oder einem elektrischen Netz mit mindestens einem dreiphasigen Umrichter dadurch gelöst, dass Mittel zur Überwachung der einzelnen Phasen auf einen Überlastungszustand vorgesehen sind, welche dazu ausgebildet sind, im Falle eines Überlastungszustands in einer oder zwei Phasen der dreiphasigen Umrichter zumindest für die Dauer des detektierten Überlastungszustands die Brückenschaltung mit einer oder zwei nicht überlasteten Phasen weiter zu betreiben, und die Mittel dazu ausgebildet sind, zumindest für die Dauer des Überlastungszustands anstelle der vorgegebenen Sollspannungswerte modifizierte Sollspannungswerte zu bestimmen, welche zur Steuerung der Brückenschaltung verwendet werden und die Mittel ferner ausgebildet sind, zur Bestimmung der modifizierten Sollspannungswerte die vorgegebenen Sollspannungswerte der drei Phasen in einen vorgegebenen Sollspannungsdrehzeiger im $\alpha\beta$-Koordinatensystem zu transformieren, den Sollspannungsdrehzeiger in einen Differenzspannungszeiger und mindestens einen modifizierten Sollspannungsdrehzeiger im $\alpha\beta$-Koordinatensystem zu zerlegen, wobei der mindestens eine modifizierte Sollspannungsdrehzeiger in den überlasteten Phasen jeweils die sich einstellende maximal Phasenspannung berücksichtigt und aus dem modifizierten Sollspannungsdrehzeiger im $\alpha\beta$-Koordinatensystem die modifizierten Sollspannungswerte bestimmt werden können.

Im Gegensatz zu den Vorrichtungen, die bisher die gesamte Brückenschaltung im Überlastungsfall gesperrt haben, ergibt sich bereits durch den Weiterbetrieb mit nicht überlasteten Phasen ein verbessertes Regelverhalten der Brückenschaltung im Überlastungsfall. Mithilfe des modifizierten Sollspannungsdrehzeigers kann die Ansteuerung der Brückenschaltung der Vorrichtung durch die Steuereinheit im Überlastungsfall auf einfache Weise variiert und optimiert werden.

Gemäß einer ersten Ausgestaltung der Vorrichtung sind die Mittel zur Überwachung der einzelnen Phasen auf einen Überlastungszustand bevorzugt dazu ausgebildet, anstelle vorgegebener Sollspannungswerte modifizierte Sollspannungswerte zu bestimmen und die modifizierten Sollspannungswerte zur Steuerung der Brückenschaltung zu verwenden. Wie bereits zuvor ausgeführt, kann die Brückenschaltung trotz Überlastung in einer oder zwei Phasen der Brückenschaltung durch Bereitstellung modifizierter Sollspannungswerte für die Steuereinheit weiterbetrieben und damit ein verbessertes dynamisches Verhalten der Vorrichtung im Überlastungsfall bei geringeren Kosten für die Leistungsschalter bereitstellen. Die Verwendung modifizierter Sollspannungswerte erlaubt es dabei, ein gewünschtes, beispielsweise optimiertes Regelverhalten des netzseitigen Blindstroms einzustellen.

Schließlich ist die Vorrichtung vorzugsweise eine an einem elektrischen Netz betriebene Windenergieanlage, eine Photovoltaikanlage mit oder ohne Speicher oder eine am Netz betriebene Komponente zur Speicherung elektrischer Energie, beispielsweise ein Batteriespeicher. Die Windenergieanlage kann einen Vollumrichter oder eine doppeltgespeiste Asynchronmaschine mit Teilumrichter aufweisen. Die genannten Vorrichtungen weisen alle Umrichter mit Brückenschaltungen auf und können bei reduziertem Kosten ein verbessertes dynamisches Regelverhalten, insbesondere im Falle von Netzspannungsfehlern, bereitstellen.

Die Erfindung wird nun anhand von Ausführungsbeispielen in Verbindung mit den Zeichnungen näher erläutert. Die Zeichnungen zeigen in

Fig. 1 den Aufbau einer dreiphasigen Brückenschaltung aus dem Stand der Technik,

Fig. 2 in einem $\alpha\beta$-Koordinatensystem die möglichen Schaltzeiger der Brückenschaltung aus Fig. 1

Fig. 3 ein Diagramm einer simulierten Blindstromabgabe von zwei verschiedenen dreiphasigen Umrichtern nach dem Stand der Technik,

Fig. 4 ein Blockschaltbild eines Ausführungsbeispiels des erfindungsgemäßen Verfahrens,

Fig. 5 ein Ausführungsbeispiel für die Zerlegung des Sollspannungsdrehzeigers in einen Differenzspannungsdrehzeiger und einen modifizierten Sollspannungsdrehzeiger bei Überlastung einer Phase,

Fig. 6 ein Ausführungsbeispiel für die Zerlegung des Sollspannungsdrehzeigers in einen Differenzspannungsdrehzeiger und einen modifizierten Sollspannungsdrehzeiger bei Überlastung von zwei Phasen,

Fig. 7 ein Diagramm einer simulierten Blindstromabgabe eines dreiphasigen Umrichters gemäß einem Ausführungsbeispiel der vorliegenden Erfindung im Vergleich zur Blindstromabgabe eines Umrichters aus dem Stand der Technik mit überdimensionierten Leistungsschaltern,

Fig. 8 ein Diagramm einer simulierten Blindstromabgabe eines dreiphasigen Umrichters gemäß einem Ausführungsbeispiel der vorliegenden Erfindung im Vergleich zur Blindstromabgabe eines Umrichters mit Abschaltung der IGBTs der Brückenschaltung nach dem Stand der Technik.

Fig. 1 zeigt zunächst die aus dem Stand der Technik bekannte Brückenschaltung 1, welche die Leistungsschalter sw1, sw2, sw3, sw1', sw2' und sw3', die den entsprechenden Phasen L1, L2 und L3 zugeordnet sind. Die Leistungsschalter einer Phase, beispielsweise sw1 und sw1' sind in Serie zum Gleichspannungszwischenkreis $V_{DC}$ angeordnet. Das Gleiche gilt für die den Phasen L2 und L3 zugeordneten Leistungsschalter sw2 und sw2' sowie sw3 und sw3'. Mithilfe der genannten Leistungsschalter, welche hier als IGBT-Leistungsschalter mit antiparallel geschalteter Freilaufdiode realisiert sind, kann über die Phasen L1, L2 und L3 eine definierte, dreiphasige Wechselspannung erzeugt werden.

Fig. 2 zeigt nun die durch die Brückenschaltung erzeugbaren Schaltzeiger im $\alpha\beta$-Koordinatensystem. Da die sechs Leistungsschalter lediglich binär schalten können, kann die Brückenschaltung 1 nur die in Fig. 2 dargestellten, diskreten Schaltzeiger annehmen. Insgesamt 8 Schaltzeiger V0 bis V7 können geschaltet werden. Die Zustände V0 und V7 sind im Zeigerdiagramm der Fig. 2 allerdings nicht dargestellt, da diese Null-Vektoren ergeben. Über die Schaltzeiger V1 bis V6 können verschiedene Spannungswerte an den drei Phasen L1, L2, L3 geschaltet werden. Die Schaltung der unterschiedlichen, diskreten Schaltzeiger der Brückenschaltung 1 übernimmt die Steuereinheit des Umrichters (hier nicht dargestellt). Die Steuereinheit des Umrichters benötigt hierzu beispielsweise vorgegebene Sollspannungswerte der einzelnen Phasen v1, v2, v3 als Eingangsgröße. Diese Eingangsgröße kann aber auch über einen Sollspannungsdrehzeiger im $\alpha\beta$-Koordinatensystem an die Steuereinheit übergeben werden. Die Steuereinheit steuert die Brückenschaltung, beispielsweise unter Verwendung von bekannten Modulationsverfahren, beispielsweise einem Pulsweitenmodulationsverfahren an.

In Fig. 3 ist nun in einem Diagramm eine simulierte Blindstromabgabe von zwei verschiedenen, dreiphasigen Umrichtern nach dem Stand der Technik dargestellt.

Während Kurve A ein sehr gutes Einschwingverhalten mit geringem Überschwingen besitzt, zeigt Kurve B ein verschlechtertes Einschwingverhalten auf die Anforderung einer Blindstromabgabe in Antwort auf einen Netzspannungseinbruch. Grund dafür ist, dass die IGBT-Leistungsschalter in Kurve A so dimensioniert wurden, dass auch im Falle des Netzspannungseinbruchs keine Überlastungszustände auftreten. Kurve B zeigt das Regelverhalten einer kostengünstigeren Brückenschaltung, bei welcher die IGBT-Leistungsschalter so dimensioniert wurden, dass im Falle des simulierten Netzspannungseinbruchs im "Fault-Ride-Through"-(FRT)-Betrieb zwei Phasen überlastet werden und die Brückenschaltung aufgrund von Überlastungszuständen kurzzeitig abgeschaltet wird. Deutlich ist das schlechtere Einschwingverhalten der kostengünstigeren Variante zu erkennen.

Ein Ausführungsbeispiel eines erfindungsgemäßen Verfahrens zum Betreiben eines dreiphasigen Umrichters, bei welchem auch bei kostengünstig dimensionierten Leistungsschaltern einer Brückenschaltung ein verbessertes Regelverhalten im Falle von Überlastungszuständen einzelner Phasen zu erzielt wird, ist in Fig. 4 dargestellt.

Fig. 4 zeigt zunächst die vorgegebenen Sollspannungswerte v1, v2, v3, welche von einer Steuerung an den Schaltungsblock 2 übergeben werden. Zusätzlich sind Mittel 3 zur Überwachung der Phasen der Brückenschaltung 1 vorgesehen, welche eine Überlastung einer oder mehrerer Phasen detektieren können. Diese reagieren im dargestellten Ausführungsbeispiel beispielsweise auf übermittelte Temperaturwerte T oder Phasenströme i1, i2, i3, welche im dargestellten Ausführungsbeispiel mit den maximal erlaubten Werten $T_{max}$ und $i_{max}$ verglichen werden, um einen Überlastungszustand zu detektieren. Die Eingangsgrößen der Überwachungsmittel können dabei nahezu beliebig gewählt werden, sofern diese eine Detektion eines Überlastungszustands einer Phase L1, L2, L3 erlauben.

Sofern keine Überlastung detektiert wird, werden die vorgegebenen Sollspannungswerte v1, v2 und v3 ohne Änderung vom Schaltungsblock 2 an die Steuereinheit 4 übergeben (in Fig. 4 nicht dargestellt). Die Steuereinheit 4 steuert die Leistungsschalter sw1 bis sw3' der Brückenschaltung 1 dann basierend auf den vorgegebenen Sollspannungswerten mittels bekannter Verfahren, beispielsweise einem Pulsweitenmodulationsverfahren(PWM) an.

Im Falle der Detektion eines Überlastungszustands in einer oder zweier Phasen des dreiphasigen Umrichters wird gemäß dem Ausführungsbeispiel in Fig. 4 zumindest für die Dauer des detektierten Überlastungszustands die Brückenschaltung mit einer oder zwei nicht überlasteten Phasen weiterbetrieben. Hierdurch kann bereits Einfluss auf das Regelverhalten der Brückenschaltung genommen werden. Werden gemäß einer Ausgestaltung des Verfahrens im Überlastungsfall anstelle der vorgegebenen Sollspannungswerte v1, v2, v3 modifizierte Sollspannungswerte vmod1, vmod2 und vmod3 bestimmt und zur Steuerung der Brückenschaltung verwendet, kann das Regelverhalten weiter verbessert werden.

In dem Ausführungsbeispiel in Fig. 4 werden die Spannungswerte vmod1, vmod2 und vmod3 als modifizierte Sollspannungswerte der einzelnen Phasen L1, L2 und L3 vom Schaltungsblock 2 an die Steuereinheit 4 übergeben. Im Unterschied zum Stand der Technik wird durch die Übermittlung von modifizierten Sollspannungswerten es ermöglicht, die Brückenschaltung 1 unter Berücksichtigung von weiteren Vorgaben, beispielsweise einem optimierten Regelverhalten, weiter zu betreiben. Die modifizierten Sollspannungswerte sind beispielsweise im Hinblick auf ein verbessertes Regelverhalten geänderte Sollspannungswerte gegenüber den von der Steuerung vorgegebenen Sollspannungswerten v1, v2 und v3.

Um den Überlastungszustand der einzelnen Phasen L1, L2, L3 der Brückenschaltung 1 besonders einfach zu berücksichtigen, wird bei der Überwachung der einzelnen Phasen der Brückenschaltung, die bei der jeweiligen Überlastung sich einstellende Phasenspannung ermittelt und als modifizierter Sollspannungswert für die überlasteten Phasen verwendet. Die sich einstellende Phasenspannung an einer überlasteten Phase entspricht der maximalen Phasenspannung, welche 2/3 $V_{DC}$ oder -2/3 $V_{DC}$ entspricht. Mit dieser einfachen Modifizierung der Sollspannungswerte können die Leistungsschalter mit modifizierten Sollspannungswerte vmod1, vmod2 und vmod3 weiterbetrieben werden.

Gleichzeitig ermöglicht die Berücksichtigung der sich einstellenden Phasenspannung an den überlasteten Phasen bei der Bestimmung der modifizierten Sollspannungswerte die Nutzung der verbliebenen Sollspannungswerte der nicht überlasteten Phasen, um einen modifizierten Sollspannungswert für die nicht überlasteten Phasen vorzugeben, welcher ein besonders gutes Regelverhalten der Brückenschaltung im überlasteten Zustand beschreibt. Dabei können lediglich Überlastungen in einer oder maximal zwei Phasen berücksichtigt werden. Bei Überlastung von allen drei Phasen sind die IGBTs der Brückenschaltung dagegen vollständig abgeschaltet.

Mittels der Vorgabe der modifizierten Sollspannungswerte vmod1, vmod2, vmod3 der mindestens einen nicht überlasteten Phase entsteht im Vergleich zum Stand der Technik ein zusätzlicher Freiheitsgrad, womit das Regelverhalten der Brückenschaltung gezielt verbessert werden kann.

Um modifizierte Sollspannungswerte vmod1, vmod2, vmod3 zu ermitteln, welche ein besseres Regelverhalten der Brückenschaltung bei auftretenden Überlastungen erlauben, werden gemäß einer bevorzugten Ausführungsform zur Bestimmung der modifizierten Sollspannungswerte die vorgegebenen Sollspannungswerte der drei Phasen in einen vorgegebenen Sollspannungsdrehzeiger $V_{soll}$ im $\alpha\beta$-Koordinatensystem transformiert.

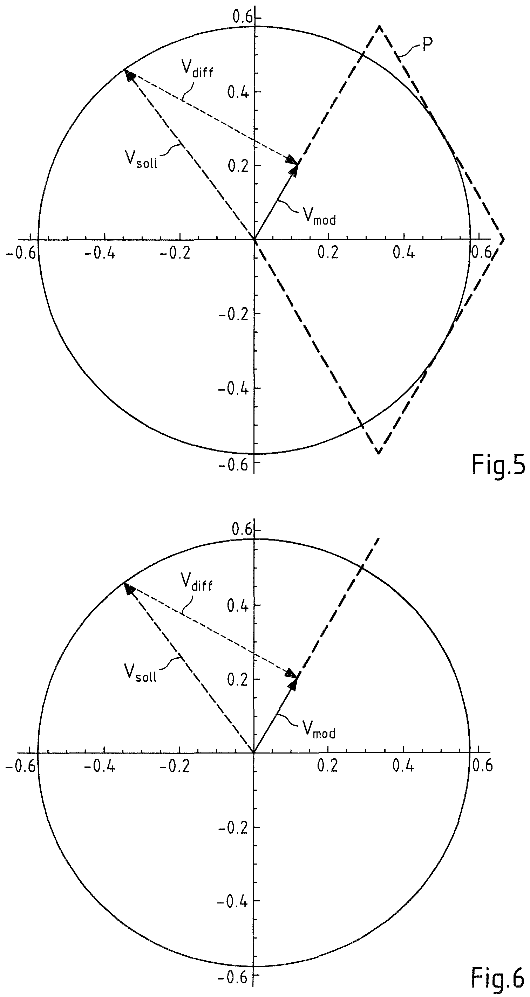

Fig. 5 und 6 zeigen verschiedene Möglichkeiten für die Zerlegung des Sollspannungsdrehzeigers $V_{soll}$ in einen Differenzspannungsdrehzeiger $V_{diff}$ und einen modifizierten Sollspannungsdrehzeigers $V_{mod}$ für unterschiedliche Überlastungsfälle.

Die Fig. 5 und 6 unterscheiden sich dabei insofern, dass in Fig. 5 Phase L1 mit einem positiven Strom überlastet ist. Fig. 6 zeigt den Fall, dass Phase L1 und Phase L2 mit einem positiven Strom überlastet sind. Ein positiver Strom entspricht jeweils einem Strom in Richtung der Pfeile an den Phasen L1, L2 und L3 in Fig. 1.

Ferner zeigt Fig. 5, dass modifizierte Sollspannungsdrehzeiger $V_{mod}$ innerhalb des Parallelogramms P erzeugt werden können. Durch einfache Vektoraddition des vorgegebenen Sollspannungsdrehzeigers $V_{soll}$ mit einem Differenz-spannungsdrehzeiger $V_{diff}$ ergibt sich ein spezifischer modifizierter Sollspannungsdrehzeiger $V_{mod}$, wie in Fig. 5 dargestellt. $V_{mod}$ kann jetzt abhängig von Vorgaben für den Differenzspannungsdrehzeiger $V_{diff}$ erzeugt werden.

Im Falle der Überlastung einer Phase ist es, wie Fig. 5 zeigt, möglich, die innerhalb des Parallelogramms P liegenden Spannungsdrehzeiger über die nicht überlasteten Phasen L2 und L3 vollständig zu rekonstruieren, sodass der Differenzspannungsdrehzeiger $V_{diff}$ den Wert 0 annehmen kann, solange der vorgegebenen Sollspannungsdrehzeiger

$V_{soll}$ sich innerhalb des Parallelogramms P bewegt.

Gleiches gilt auch für Fig. 6 für den Fall, dass der vorgegebene Sollspannungsdrehzeiger $V_{soll}$ exakt auf der gestrichelten Geraden des noch möglichen, modifizierten Sollspannungsdrehzeigers $V_{mod}$ liegt, wobei hier nur noch eine Phase L3 aktiv geschaltet werden kann. Aufgrund der zwei überlasteten Phasen L1 und L2 mit positivem Überlastungsstrom besteht in diesem Fall lediglich die Möglichkeit, die Werte entlang der gestrichelten Geraden in Fig. 6 entsprechend der Länge des noch möglichen, modifizierten Sollspannungsdrehzeigers $V_{mod}$ einzustellen.

Wie bereits zuvor ausgeführt, kann die Länge des Differenzspannungsdrehzeigers $V_{diff}$, also der Betrag des Differenzspannungsdrehzeigers $V_{diff}$ einen vorbestimmten Wert annehmen. So ist es gemäß einer weiteren Ausgestaltung möglich, den Differenzspannungsdrehzeiger $V_{diff}$ in seiner Länge minimal zu gestalten. Damit stellt sich in der Brückenschaltung 1 der bezüglich des durch die vorgegebenen Sollspannungswerte v1, v2, v3 vorgegebene Schaltzustand nahest möglicher Schaltzustand unter Berücksichtigung der nicht überlasteten Phasen ein, sodass eine weitere Verbesserung des dynamischen Regelverhaltens der Brückenschaltung erzielt wird. Beispielsweise kann der Differenzspannungsdrehzeiger $V_{diff}$ dann die kürzeste Länge ungleich Null aufweisen, wenn der modifizierten Sollspannungsdrehzeiger $V_{mod}$ rechtwinklig zum Differenzspannungsdrehzeiger $V_{diff}$ ist, beide Vektoren also einen rechten Winkel bilden.

Mathematisch kann der modifizierte Sollspannungsdrehzeiger $V_{mod}$ mit dem Differenzspannungsdrehzeiger $V_{diff}$ mit dem kleinsten Betrag beispielsweise für den in Fig. 5 vorgegebenen Sollspannungsdrehzeiger $V_{soll}$ mit

$$vmod1 = vmax1$$

$$vmod2 = vmax1$$

$$vmod3 = vmax1 - 3valpha/4 - (3\sqrt{3}\,vbeta)/4$$

angegeben werden. Valpha und vbeta sind dabei die $\alpha\beta$-Koordinaten des vorgegebenen Sollspannungsdrehzeigers $V_{soll}$ im $\alpha\beta$-Koordinatensystem. Vmax1 ist der sich einstellende maximale Wert für die Phasenspannung, für die Schaltung nach Fig. 1 und einem dreiphasigen Netz mit symmetrischen Impedanzen $2/3\,V_{DC}$.

Liegt der vorgegebene Sollspannungsdrehzeiger $V_{soll}$ innerhalb des Parallelogramms P, lässt sich dieser exakt rekonstruieren, sodass der Differenzspannungsdrehzeiger $V_{diff}$ die Länge Null hat. Die modifizierten Sollspannungswerte vmod1, vmod2, vmod3 des modifizierten Sollspannungsdrehzeiger $V_{mod}$ mit einem Differenzspannungsdrehzeiger $V_{diff}$ Null kann innerhalb des Parallelogramms mit

$$vmod1 = vmax1$$

$$vmod2 = (\sqrt{3}\,vbeta)/2 - 3valpha/2 + vmax1$$

$$vmod3 = -(\sqrt{3}\,vbeta)/2 - 3valpha/2 + vmax1$$

angeben werden.

In Fig. 6 ist, wie bereits ausgeführt, Phase 1 und Phase 2 mit einem positiven Strom überlastet. Für den dargestellten vorgegebene Sollspannungsdrehzeiger $V_{soll}$ ergibt sich beispielsweise ein minimaler Differenzdrehzeiger $V_{diff}$ mit:

$$vmod1 = vmax1$$

$$vmod2 = vmax1$$

$$vmod3 = vmax1 - 3valpha/4 - (3\sqrt{3}\,vbeta)/4$$

Gemäß einer alternativen Ausführungsform kann der modifizierte Sollspannungsdrehzeiger $V_{mod}$ selbst im $\alpha\beta$-Koordinatensystem unmittelbar von der Steuereinheit 4 zur Ansteuerung der Brückenschaltung verwendet werden, sofern die Steuereinheit hierzu geeignet ist.

Das Regelverhalten der Brückenschaltung 1 wurde nun unter Berücksichtigung einer Vektoroptimierung, bei welcher modifizierte Sollspannungsdrehzeiger $V_{mod}$ bei minimalem Betrag des Differenzspannungsdrehzeigers $V_{diff}$

ermittelt wurden, über eine geforderte Blindstromabgabe im Falle eines Netzspannungsabfalls simuliert. Dies ist eine übliche Anforderung, welche in den Grid-Codes von Netzbetreibern zur Netzspannungsstabilisierung definiert werden.

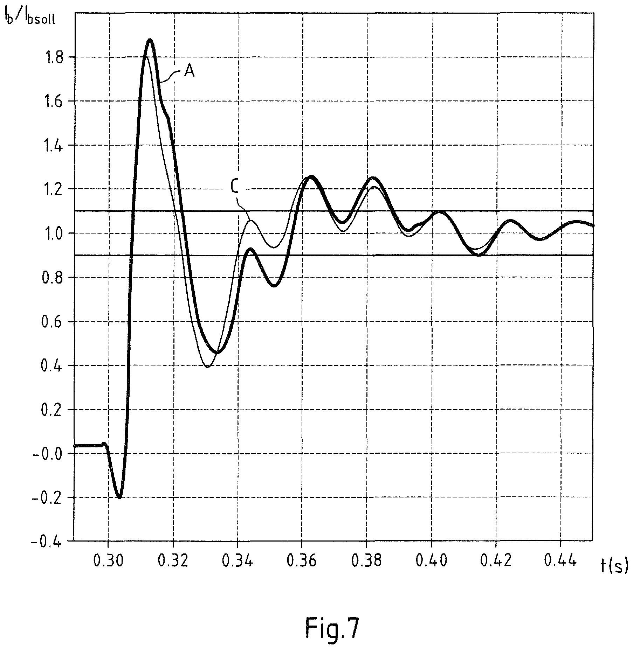

Fig. 7 zeigt das Diagramm dieser simulierten Blindstromabgabe des dreiphasigen Umrichters mit kostenoptimierten IGBT-Leistungsschaltern und optimierter Sollspannungsdrehzeigervorgabe gemäß einem Ausführungsbeispiel der Erfindung in Kurve C. Dazu ist im Vergleich eine Blindstromabgabe mit IGBT-Leistungsschaltern dargestellt, welche so dimensioniert sind, dass diese keine Überlastungszustände im Fall des Netzspannungseinbruch zeigen (Kurve A).

Wie Fig. 7 zeigt, ist das erfindungsgemäße Verfahren, insbesondere für den Betrieb von Brückenschaltungen in dreiphasigen Umrichtern bei Netzspannungsfehlern vorteilhaft, da es ein besonders schnelles Einschwingverhalten auf vorgegebene Blindstromwerte ermöglicht, ohne dabei die IGBT-Leistungsschalter überdimensionieren zu müssen. Wie bereits erläutert, können hierdurch 10% bis 15% geringer dimensionierte IGBT-Leistungsschalter eingesetzt werden, ohne dass es zu Einbußen im Regelverhalten kommt.

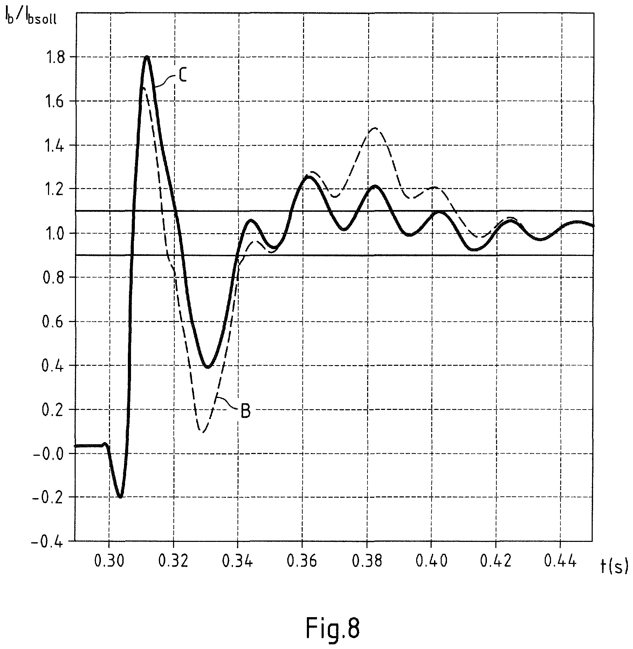

Ein Vergleich des erfindungsgemäßen Ausführungsbeispiels mit kostenoptimierten IGBT-Leistungsschaltern ohne Anwendung des erfindungsgemäßen Verfahrens, Kurve B, zeigt Fig. 8. Das erfindungsgemäße Verfahren führt zu einer signifikanten Verbesserung des dynamischen Regelverhaltens der Brückenschaltung bei gleicher Hardware. Kurve C des erfindungsgemäßen Ausführungsbeispiels zeigt bereits nach 0,39 s etwa das dauerhafte Erreichen des Toleranzbandes für die Blindstromabgabe, wohingegen, wie eingangs ausgeführt, die aus dem Stand der Technik bekannte Variante erst bei 0,41 Sekunden das Toleranzband erreicht.

Es ist daher nachvollziehbar, dass das Verfahren zum Betreiben der Brückenschaltung eines dreiphasigen Umrichters gemäß der vorliegenden Erfindung besonders vorteilhaft mit Vorrichtungen zur Erzeugung und Einspeisung elektrischer Energie in ein elektrisches Netz, vorzugsweise mit dreiphasigen Umrichtern von Windenergieanlagen durchgeführt werden kann. Darüber hinaus können als Vorrichtungen zur Erzeugung und Einspeisung elektrischer Energie Photovoltaikanlagen mit oder ohne Speicher oder auch Batteriespeicher selbst, welche mit dem elektrischen Netz verbunden sind, vorteilhaft mit dem erfindungsgemäßen Verfahren betrieben werden und den daraus resultierenden Kostenvorteilen für die Vorrichtungen profitieren. Wie die Fig. 7 und 8 deutlich zeigen, ist das erfindungsgemäße Verfahren vor allem für den Fault-Ride-Through-(F RT)-Betrieb eines Umrichters am Netz vorteilhaft.

## Patentansprüche

1. Verfahren zum Betreiben eines dreiphasigen Umrichters an einer dreiphasigen Last, insbesondere einem elektrischen Netz, wobei der dreiphasige Umrichter einen Gleichspannungszwischenkreis, mindestens eine dreiphasige Brückenschaltung (1) und mindestens eine Steuereinheit (4) zur Steuerung der Brückenschaltung (1) aufweist, wobei in der mindestens einen Brückenschaltung (1) pro Phase (L1, L2, L3) mindestens je zwei Leistungsschalter (sw1, sw2, sw3, sw1', sw2', sw3') vorgesehen sind, welche in Serie geschaltet parallel mit dem Gleichspannungszwischenkreis ($V_{DC}$) verbunden sind, wobei bei dem Verfahren abhängig von vorgegebenen Sollspannungswerten (v1, v2, v3) der drei Phasen des Umrichters die Leistungsschalter (sw1, sw2, sw3, sw1', sw2', sw3') jeder einzelnen Phase (L1, L2, L3) über die Steuereinheit (4) angesteuert werden, so dass über Schaltvorgänge der Leistungsschalter (sw1, sw2, sw3, sw1', sw2', sw3') eine dreiphasige Wechselspannung an der dreiphasigen Last erzeugt wird, wobei unter Verwendung von Überwachungsmitteln (3) eine Überwachung der Leistungsschalter in den einzelnen Phasen (L1, L2, L3) auf einen Überlastungszustand durchgeführt wird, wobei im Falle der Detektion eines Überlastungszustands in einer oder zwei Phasen des dreiphasigen Umrichters zumindest für die Dauer des detektierten Überlastungszustands die Brückenschaltung (1) mit einer oder zwei nicht überlasteten Phasen weiterbetrieben wird, wobei zumindest für die Dauer des Überlastungszustands anstelle der vorgegebenen Sollspannungswerte (v1, v2, v3) modifizierte Sollspannungswerte (vmod1, vmod2, vmod3) bestimmt werden, welche zur Steuerung der Brückenschaltung verwendet werden, **dadurch gekennzeichnet, dass** zur Bestimmung der modifizierten Sollspannungswerte (vmod1, vmod2, vmod3) die vorgegebenen Sollspannungswerte der drei Phasen in einen vorgegebenen Sollspannungsdrehzeiger ($V_{soll}$) im $\alpha\beta$-Koordinatensystem transformiert werden, der Sollspannungsdrehzeiger ($V_{soll}$) in einen Differenzspannungszeiger ($V_{diff}$) und mindestens einen modifizierten Sollspannungsdrehzeiger ($V_{mod}$) im $\alpha\beta$-Koordinatensystem zerlegt wird, wobei der mindestens eine modifizierte Sollspannungsdrehzeiger ($V_{mod}$) in den überlasteten Phasen jeweils die sich einstellende maximal Phasenspannung (vmax) berücksichtigt und aus dem modifizierten Sollspannungsdrehzeiger ($V_{mod}$) im $\alpha\beta$-Koordinatensystem die modifizierten Sollspannungswerte (vmod1, vmod2, vmod3) bestimmt werden können.

2. Verfahren nach Anspruch 1,
   **dadurch gekennzeichnet, dass,**
   durch die Überwachungsmittel (3) der Überlastungszustand einer Phase durch Überschreiten eines vorbestimmten

Stromes ($i_{max}$) in der betreffenden Phase oder einer vorbestimmten Temperatur ($T_{max}$) eines Bauteils, vorzugsweise eines Leistungsschalters oder einer Freilaufdiode, in der betreffenden Phase erkannt wird.

3. Verfahren nach einem der Ansprüche 1 oder 2,
   **dadurch gekennzeichnet, dass,**
   bei der Überwachung der einzelnen Phasen (L1, L2, L3) der Brückenschaltung (1) sich die bei der jeweiligen Überlastung einstellende Phasenspannung bestimmt und als modifizierter Sollspannungswert (vmod1, vmod2, vmod3) für die überlastete Phasen (L1, L2, L3) verwendet wird.

4. Verfahren nach einem der Ansprüche 1 bis 3,
   **dadurch gekennzeichnet, dass**
   für mindestens eine nicht überlastete Phase (L1, L2, L3) unter Berücksichtigung des vorgegebenen Sollspannungswerts (v1, v2, v3) für drei Phasen und der modifizierten Sollspannungswerte für mindestens eine überlastete Phase modifizierte Sollspannungswerte (vmod1, vmod2, vmod3) für die mindestens eine nicht überlastete Phase ermittelt werden.

5. Verfahren nach Anspruch 1 bis 4,
   **dadurch gekennzeichnet, dass**
   alternativ der modifizierte Sollspannungsdrehzeiger ($V_{mod}$) im $\alpha\beta$-Koordinatensystem von der Steuereinheit (4) zur Ansteuerung der Brückenschaltung (1) verwendet wird.

6. Verfahren nach einem der Ansprüche 1 bis 5,
   **dadurch gekennzeichnet, dass**
   der Betrag des Differenzspannungsdrehzeigers ($V_{diff}$) einen vorbestimmten Wert aufweist.

7. Verfahren nach einem der Ansprüche 1 bis 6,
   **dadurch gekennzeichnet, dass**
   der Betrag des Differenzspannungsdrehzeigers ($V_{diff}$) so klein wie möglich gewählt wird.

8. Verfahren nach einem der Ansprüche 1 bis 7,
   **dadurch gekennzeichnet, dass**
   der Betrag des Differenzspannungsdrehzeigers ($V_{diff}$) zumindest zeitweise den Wert Null hat.

9. Verfahren nach einem der Ansprüche 1 bis 8,
   **dadurch gekennzeichnet, dass**
   in der Brückenschaltung (1) IGBTs mit mindestens einer antiparallel geschalteten Freilaufdiode als Leistungsschalter (sw1, sw2, sw3m, sw1', sw2', sw3') verwendet werden.

10. Verfahren nach einem der Ansprüche 1 bis 9,
    **dadurch gekennzeichnet, dass**
    das Verfahren mit dreiphasigen Umrichtern von Vorrichtungen zur Erzeugung und Einspeisung elektrischer Energie in ein elektrisches Netz, mit dreiphasigen Umrichtern von Windenergieanlagen, von Photovoltaikanlagen mit oder ohne elektrische Speicher oder von Komponenten zur Speicherung elektrischer Energie, insbesondere von Batteriespeichern, die am elektrischen Netz betrieben werden, durchgeführt wird.

11. Verfahren nach einem der Ansprüche 1 bis 10,
    **dadurch gekennzeichnet, dass**
    das Verfahren während eines Netzspannungsfehlers, vorzugsweise im "Fault-Ride-Through"-Betrieb des Umrichters durchgeführt wird.

12. Vorrichtung zur Erzeugung einer dreiphasigen Wechselspannung an einer dreiphasigen Last oder einem elektrischen Netz mit mindestens einem dreiphasigen Umrichter und einem Gleichspannungszwischenkreis ($V_{DC}$), wobei der Umrichter mindestens eine dreiphasige Brückenschaltung (1) und mindestens eine Steuereinheit (4) zur Steuerung der Brückenschaltung (1) aufweist, wobei in der mindestens einen Brückenschaltung (1) pro Phase (L1, L2, L3) mindestens je zwei Leistungsschalter(sw1, sw2, sw3, sw1', sw2', sw3') vorgesehen sind, welche in Serie geschaltet parallel mit dem Gleichspannungszwischenkreis ($V_{DC}$) verbunden sind, wobei die Vorrichtung dazu ausgebildet ist, abhängig von vorgegebenen Sollspannungswerten (v1, v2, v3) für alle drei Phasen (L1, L2, L3) des Umrichters die Leistungsschalter (sw1, sw2, sw3, sw1', sw2', sw3') jeder einzelnen Phase über die Steuereinheit (11) anzusteuern, so dass über Schaltvorgänge der Leistungsschalter (sw1, sw2, sw3, sw1', sw2', sw3') eine dreiphasige Wechselspannung erzeugt wird, insbesondere zur Durchführung eines Verfahrens nach einem Ansprüche 1 bis 11, wobei Mittel (2, 3) zur Überwachung der Leistungsschalter in den einzelnen Phasen auf einen Überlastungszustand vorgesehen sind, welche dazu ausgebildet sind, im Falle der Detektion eines Überlastungszustands in einer oder zwei Phasen des dreiphasigen Umrichters zumindest für die Dauer des detektierten Überlastungszustands die Brückenschaltung (1) mit einer oder zwei nicht überlasteten Phasen (L1, L2, L3) weiter zu betreiben,

wobei die Mittel dazu ausgebildet sind, zumindest für die Dauer des Überlastungszustands anstelle der vorgegebenen Sollspannungswerte (v1, v2, v3) modifizierte Sollspannungswerte (vmod1, vmod2, vmod3) zu bestimmen, welche zur Steuerung der Brückenschaltung verwendet werden,

**dadurch gekennzeichnet, dass** die Mittel ferner dazu ausgebildet sind, zur Bestimmung der modifizierten Sollspannungswerte (vmod1, vmod2, vmod3) die vorgegebenen Sollspannungswerte der drei Phasen in einen vorgegebenen Sollspannungsdrehzeiger ($V_{soll}$) im $\alpha\beta$-Koordinatensystem zu transformieren, den Sollspannungsdrehzeiger ($V_{soll}$) in einen Differenzspannungszeiger ($V_{diff}$) und mindestens einen modifizierten Sollspannungsdrehzeiger ($V_{mod}$) im $\alpha\beta$-Koordinatensystem zu zerlegen, wobei der mindestens eine modifizierte Sollspannungsdrehzeiger ($V_{mod}$) in den überlasteten Phasen jeweils die sich einstellende maximal Phasenspannung (vmax) berücksichtigt und aus dem modifizierten Sollspannungsdrehzeiger ($V_{mod}$) im $\alpha\beta$-Koordinatensystem die modifizierten Sollspannungswerte (vmod1, vmod2, vmod3) bestimmt werden können.

13. Vorrichtung nach Anspruch 12,
**dadurch gekennzeichnet, dass**
die Vorrichtung eine an einem Netz betriebene Windenergieanlage, Photovoltaikanlage mit oder ohne Speicher oder eine am Netz betriebene Komponente zur Speicherung elektrischer Energie, insbesondere ein Batteriespeicher ist.

**Claims**

1. Method for operating a three-phase inverter on a three-phase load, in particular on an electrical grid, wherein the three-phase inverter has a direct voltage intermediate circuit, at least one three-phase bridge circuit (1) and at least one control unit (4) for controlling the bridge circuit (1), wherein, in the at least one bridge circuit (1), at least two power switches (sw1, sw2, sw3, sw1', sw2', sw3') per phase (L1, L2, L3) are provided, which are connected in series parallel to the direct voltage intermediate circuit ($V_{DC}$), wherein in the method, depending on predefined target voltage values (v1, v2, v3) of the three phases of the inverter, the power switches (sw1, sw2, sw3, sw1', sw2', sw3') of each individual phase (L1, L2, L3) are actuated via the control unit (4) such that a three-phase alternating voltage is generated on the three-phase load via switching operations of the power switches (sw1, sw2, sw3, sw1', sw2', sw3'), wherein a monitoring of the power switches in the individual phases (L1, L2, L3) for an overload state is carried out using monitoring means (3), wherein if an overload state is detected in one or two phases of the three-phase inverter, the bridge circuit (1) continues to be operated with one or two non-overloaded phases at least for the duration of the detected overload state, whereby instead of the predefined target voltage values (v1, v2, v3), modified target voltage values (vmod1, vmod2, vmod3) are determined at least for the duration of the overload state, which are used to control the bridge circuit,
**characterized in that**,
in order to determine the modified target voltage values (vmod1, vmod2, vmod3), the predefined target voltage values of the three phases are transformed into a predefined target voltage rotating phasor ($V_{target}$) in the $\alpha\beta$-coordinate system, the target voltage rotating phasor ($V_{target}$) is decomposed into a differential voltage rotating phasor ($V_{diff}$) and at least one modified target voltage rotating phasor ($V_{mod}$) in the $\alpha\beta$-coordinate system, wherein the at least one modified target voltage rotating phasor ($V_{mod}$) in the overloaded phases takes into account in each case the resulting maximum phase voltage (vmax) and from the modified target voltage rotating phasor ($V_{mod}$) in the $\alpha\beta$-coordinate system, the modified target voltage values (vmod1, vmod2, vmod3) can be determined.

2. Method according to claim 1,
**characterised in that**
the overload state of a phase is detected by the monitoring means (3) when a predetermined current ($i_{max}$) in the relevant phase or a predetermined temperature ($T_{max}$) of a component, preferably of a power switch or of a freewheeling diode, in the relevant phase is exceeded.

3. Method according to any one of claims 1 or 2,
**characterised in that**
during the monitoring of the individual phases (L1, L2, L3) of the bridge circuit (1), the phase voltage resulting during the respective overload is determined and used as a modified target voltage value (vmod1, vmod2, vmod3) for the overloaded phase (L1, L2, L3).

4. Method according to any one of claims 1 to 3,
**characterised in that**
for at least one non-overloaded phase (L1, L2, L3), modified target voltage values (vmod1, vmod2, vmod3) for the at least one non-overloaded phase are determined taking into account the predefined target voltage value (v1, v2, v3) for three phases and the modified target voltage values for at least one overloaded phase.

5. Method according to any one of claims 1 to 4,
**characterised in that**
alternatively the modified target voltage rotating phasor ($V_{mod}$) in the $\alpha\beta$-coordinate system is used by the control unit (4) to actuate the bridge circuit (1).

6. Method according to any one of claims 1 to 5,
**characterised in that**
the absolute value of the differential voltage rotating phasor ($V_{diff}$) has a predetermined value.

7. Method according to any one of claims 1 to 6,
**characterised in that**
the absolute value of the differential voltage rotating phasor ($V_{diff}$) is selected to be as small as possible.

8. Method according to any one of claims 1 to 7,
**characterised in that**
the absolute value of the differential voltage rotating phasor ($V_{diff}$) at least temporarily has the value zero.

9. Method according to any one of claims 1 to 8,
**characterised in that**
IGBTs with at least one freewheeling diode connected in anti-parallel thereto are used as power switches (sw1, sw2, sw3m, sw1', sw2', sw3') in the bridge circuit (1).

10. Method according to any one of claims 1 to 9,
**characterised in that**
the method is carried out with three-phase inverters of devices for generating and feeding electrical energy into an electrical grid, with three-phase inverters of wind power systems, of photovoltaic systems with or without electrical storage devices or of components for storing electrical energy, in particular of battery storage systems, which are operated on the electrical grid.

11. Method according to any one of claims 1 to 10,
**characterised in that**
the method is carried out during a grid voltage fault, preferably in the fault ride through operation of the inverter.

12. Device for generating a three-phase alternating voltage on a three-phase load or on an electrical grid with at least one three-phase inverter and a direct voltage intermediate circuit ($V_{DC}$), wherein the inverter has at least one three-phase bridge circuit (1) and at least one control unit (4) for controlling the bridge circuit (1), wherein, in the at least one bridge circuit (1), at least two power switches (sw1, sw2, sw3, sw1', sw2', sw3') per phase (L1, L2, L3) are provided, which are connected in series parallel to the direct voltage intermediate circuit ($V_{DC}$), wherein the device is configured to actuate the power switches (sw1, sw2, sw3, sw1', sw2', sw3') of each individual phase via the control unit (11) depending on predefined target voltage values (v1, v2, v3) for all three phases (L1, L2, L3) of the inverter such that a three-phase alternating voltage is generated via switching operations of the power switches (sw1, sw2, sw3, sw1', sw2', sw3'), in particular for carrying out a method according to any one of claims 1 to 11, wherein means (2, 3) for monitoring the power switches in the individual phases for an overload state are provided, which are configured to continue to operate the bridge circuit (1), if an overload state is detected in one or two phases of the three-phase inverter, with one or two non-overloaded phases (L1, L2, L3) at least for the duration of the detected overload state, whereby the means are configured to determine, instead of the predefined target voltage values (v1, v2, v3), modified target voltage values (vmod1, vmod2, vmod3) at least for the duration of the overload state, which are used to control the bridge circuit, **characterized in that**,
the means are also configured, in order to determine the modified target voltage values (vmod1, vmod2, vmod3), to transform the predefined target voltage values of the three phases into a predefined target voltage rotating phasor ($V_{target}$) in the $\alpha\beta$-coordinate system, to decompose the target voltage rotating phasor ($V_{target}$) into a differential voltage rotating phasor ($V_{diff}$) and at least one modified target voltage rotating phasor ($V_{mod}$) in the $\alpha\beta$-coordinate system, wherein the at least one modified target voltage rotating phasor ($V_{mod}$) in the overloaded phases takes into account in each case the resulting maximum phase voltage (vmax) and from the modified target voltage rotating phasor ($V_{mod}$) in the $\alpha\beta$-coordinate system, the modified target voltage values (vmod1, vmod2, vmod3) can be determined.

**13.** Device according to claim 12,
**characterised in that**
the device is a wind power system operated on a grid, a photovoltaic system with or without a storage device or a component operated on the grid for storing electrical energy, in particular a battery storage system.

**Revendications**

**1.** Procédé de fonctionnement d'un onduleur triphasé sur une charge triphasée, en particulier sur un réseau électrique, dans lequel l'onduleur triphasé comporte un circuit intermédiaire à tension continue, au moins un circuit de pont triphasé (1) et au moins une unité de commande (4) pour commander le circuit de pont (1), dans le au moins un circuit de pont (1), au moins deux interrupteurs de puissance (sw1, sw2, sw3, sw1', sw2', sw3') par phase (L1, L2, L3) sont prévus, qui sont connectés en série parallèle au circuit intermédiaire à tension continue ($V_{DC}$), dans lequel, selon la procédé, en fonction de valeurs de tension cibles prédéfinies (v1, v2, v3) des trois phases de l'onduleur, les interrupteurs de puissance (sw1, sw2, sw3, sw1', sw2', sw3') de chaque phase individuelle (L1, L2, L3) sont actionnés par l'unité de commande (4) de sorte qu'une tension alternative triphasée est générée sur la charge triphasée par des opérations de commutation des interrupteurs de puissance (sw1, sw2, sw3, sw1', sw2', sw3'), une surveillance des interrupteurs de puissance dans les phases individuelles (L1, L2, L3) pour un état de surcharge étant effectuée à l'aide de moyens de surveillance (3), où, dans le cas un état de surcharge est détecté dans une ou deux phases de l'onduleur triphasé, le circuit de pont (1) continue à fonctionner avec une ou deux phases non surchargées au moins pendant la durée de l'état de surcharge détecté, au lieu des valeurs de tension cibles prédéfinies (v1, v2, v3), des valeurs de tension cibles modifiées (vmod1, vmod2, vmod3) sont déterminées au moins pour la durée de l'état de surcharge, qui sont utilisées pour contrôler le circuit de pont,
**caractérisé en ce que**,
afin de déterminer les valeurs de tension cible modifiées (vmod1, vmod2, vmod3), les valeurs de tension cible prédéfinies des trois phases sont transformées en un vecteur tournant de tension cible prédéfini ($V_{target}$) dans le système de coordonnées $\alpha\beta$, le vecteur tournant de tension cible ($V_{target}$) est décomposé en un vecteur tournant de tension différentielle ($V_{diff}$) et au moins un vecteur tournant de tension cible modifié ($V_{mod}$) dans le système de coordonnées $\alpha\beta$, dans lequel au moins un vecteur tournant de tension cible modifié ($V_{mod}$) dans les phases surchargées prend en compte respectivement la tension de phase maximale résultante (vmax) et, à partir du vecteur tournant de tension cible modifié ($V_{mod}$) dans le système de coordonnées $\alpha\beta$, les valeurs de tension cible modifiées (vmod1, vmod2, vmod3) peuvent être déterminées.

**2.** Méthode selon la revendication 1,
**caractérisé par le fait que**
l'état de surcharge d'une phase est détecté par les moyens de surveillance (3) lorsqu'un courant prédéterminé ($i_{max}$) dans la phase concernée ou une température prédéterminée ($T_{max}$) d'un composant, de préférence d'un interrupteur de puissance ou d'une diode de roue libre, dans la phase concernée est détecté.

**3.** Méthode selon l'une des revendications 1 ou 2,
**caractérisé par le fait que**
pendant la surveillance des phases individuelles (L1, L2, L3) du circuit de pont (1), la tension de phase résultant de la surcharge respective est déterminée et utilisée comme valeur de tension cible modifiée (vmod1, vmod2, vmod3) pour la phase surchargée (L1, L2, L3).

**4.** Méthode selon l'une des revendications 1 à 3,
**caractérisé par le fait que**
pour au moins une phase non surchargée (L1, L2, L3), des valeurs cibles de tension modifiées (vmod1, vmod2, vmod3) sont déterminées en tenant compte de la valeur cible de tension prédéfinie (v1, v2, v3) pour trois phases et des valeurs cibles de tension modifiées pour au moins une phase surchargée.

**5.** Méthode selon l'une des revendications 1 à 4,
**caractérisé par le fait que**
alternativement, le vecteur tournant de tension cible modifié ($V_{mod}$) dans le système de coordonnées $\alpha\beta$ est utilisé par l'unité de commande (4) pour actionner le circuit de pont (1).

**6.** Méthode selon l'une des revendications 1 à 5,
**caractérisé par le fait que**
la valeur absolue du vecteur tournant de tension différentielle ($V_{diff}$) a une valeur prédéterminée.

**7.** Méthode selon l'une des revendications 1 à 6,
**caractérisé par le fait que**
la valeur absolue du vecteur tournant de tension différentielle ($V_{diff}$) est choisie pour être la plus petite possible.

**8.** Méthode selon l'une des revendications 1 à 7,
**caractérisé par le fait que**
la valeur absolue du vecteur tournant de tension différentielle ($V_{diff}$) a au moins temporairement la valeur zéro.

**9.** Méthode selon l'une des revendications 1 à 8,
**caractérisé par le fait que**
des IGBT avec au moins une diode de roue libre connectée en antiparallèle sont utilisés comme interrupteurs de puissance (sw1, sw2, sw3m, sw1', sw2', sw3') dans le circuit du pont (1).

**10.** Méthode selon l'une des revendications 1 à 9,
**caractérisée par le fait que**
la méthode est mise en œuvre avec des onduleurs triphasés de dispositifs de production et d'alimentation en énergie électrique d'un réseau électrique, avec des onduleurs triphasés de systèmes éoliens, de systèmes photovoltaïques avec ou sans dispositifs de stockage électrique ou de composants de stockage de l'énergie électrique, en particulier de systèmes de stockage par batterie, qui sont exploités sur le réseau électrique.

**11.** Méthode selon l'une des revendications 1 à 10,
**caractérisée par le fait que**
la méthode est mise en œuvre pendant un défaut de tension du réseau, de préférence pendant le fonctionnement de l'onduleur en cas de défaut.

**12.** Dispositif pour générer une tension alternative triphasée sur une charge triphasée ou sur un réseau électrique avec au moins un onduleur triphasé et un circuit intermédiaire à tension continue ($V_{DC}$), dans lequel l'onduleur comporte au moins un circuit en pont triphasé (1) et au moins une unité de commande (4) pour commander le circuit en pont (1), dans le au moins un circuit en pont (1), au moins deux interrupteurs de puissance (sw1, sw2, sw3, sw1', sw2', sw3') par phase (L1, L2, L3) sont prévus, qui sont connectés en série parallèle au circuit intermédiaire à tension continue ($V_{DC}$), dans lequel le dispositif est configuré pour actionner les interrupteurs de puissance (sw1, sw2, sw3, sw1', sw2', sw3') de chaque phase individuelle via l'unité de commande (11) en fonction de valeurs de tension cibles prédéfinies (v1, v2, v3) pour les trois phases (L1, L2, L3) de l'onduleur, de sorte qu'une tension alternative triphasée est générée par des opérations de commutation des commutateurs de puissance (sw1, sw2, sw3, sw1', sw2', sw3'), en particulier pour la mise en œuvre d'un procédé selon l'une quelconque des revendications 1 à 11, dans lequel des moyens (2, 3) de surveillance des interrupteurs de puissance dans les phases individuelles pour un état de surcharge sont prévus, qui sont configurés pour continuer à faire fonctionner le circuit de pont (1), dans le cas un état de surcharge est détecté dans une ou deux phases de l'onduleur triphasé, avec une ou deux phases non surchargées (L1, L2, L3) au moins pour la durée de l'état de surcharge détecté, les moyens sont configurés pour déterminer, au lieu des valeurs de tension cibles prédéfinies (v1, v2, v3), des valeurs de tension cibles modifiées (vmod1, vmod2, vmod3) au moins pour la durée de l'état de surcharge, qui sont utilisées pour commander le circuit de pont,
**caractérisé en ce que**,
les moyens sont configurés, afin de déterminer les valeurs de tension cible modifiées (vmod1, vmod2, vmod3), pour transformer les valeurs de tension cible prédéfinies des trois phases en un vecteur tournant de tension cible prédéfini ($V_{target}$) dans le système de coordonnées $\alpha\beta$, pour décomposer le vecteur tournant de tension cible ($V_{target}$) en un vecteur tournant de tension différentielle ($V_{diff}$) et au moins un vecteur tournant de tension cible modifié ($V_{mod}$) dans le système de coordonnées $\alpha\beta$, dans lequel au moins un vecteur tournant de tension cible modifié ($V_{(mod)}$) dans les phases surchargées prend en compte respectivement la tension de phase maximale résultante (vmax) et, à partir du vecteur tournant de tension cible modifié ($V_{mod}$) dans le système de coordonnées $\alpha\beta$, les valeurs de tension cible modifiées (vmod1, vmod2, vmod3) peuvent être déterminées.

13. Dispositif selon la revendication 12,
**caractérisé par le fait que**
le dispositif est un système éolien exploité sur un réseau, un système photovoltaïque avec ou sans dispositif de stockage ou un composant exploité sur le réseau pour le stockage de l'énergie électrique, en particulier un système de stockage par batterie.

Fig.1

Fig.2

Fig.3

Fig.4

Fig.5

Fig.6

Fig.7

Fig.8

**EP 4 091 241 B1**

**IN DER BESCHREIBUNG AUFGEFÜHRTE DOKUMENTE**

**In der Beschreibung aufgeführte Patentdokumente**

- EP 2830175 A2
- EP 1152520 A2
- US 20070086226 A1
- DE 102015205627 A1
- DE 102009045351 A1

**In der Beschreibung aufgeführte Nicht-Patentliteratur**

- **ZHANG WENPING et al.** Survey on Fault-Tolerant Techniques for Power Electronic Converters. *IEEE Transaction on Power Electronics*, 01 December 2014, vol. 29 (12)
- Fault Ride Through Control of Medium-Voltage Converters with LCL Filter in Distributed Generation Systems. **ROBERT MEYER et al.** IEEE Energy Conversion Congress and Exposition. IEEEE, 15 September 2013, 1954-1961